# EUROPÄISCHE PATENTANMELDUNG

(11) **EP 1 467 161 A2**
(43) Veröffentlichungstag der Anmeldung: **13.10.2004**
(21) Anmeldenummer: 04400022.2
(22) Anmeldetag: 07.04.2004
(51) Int. Cl.: F25B 45/00, F16L 55/175, C09K 3/12

(54) **System und Verfahren zur Nachbefüllung von Klimaanlagen mit Kältemittel**

(30) Priorität: 08.04.2003 DE 10316928
(71) Anmelder: Huber Friedrich Aeronova GmbH & Co., 01257 Dresden (DE)
(72) Erfinder: Huber, Martin M., 01809 Heidenau (DE)
(74) Vertreter: Pfenning, Meinig & Partner GbR

(57) **Zusammenfassung**

Die Erfindung betrifft ein System und Verfahren zur Nachbefüllung von Klimaanlagen mit Kältemittel. Dabei bestehen neben der reinen Nachbefüllung auch Möglichkeit Leckagen im Kältemittelkreislauf von Klimaanlagen abzudichten bzw. solche Leckagen sichtbar zu machen. Gemäß der gestellten Aufgabe, soll eine solche Nachbefüllung sehr einfach, flexibel sowie mit geringen Kosten- und Zeitaufwand durchgeführt werden können. Erfindungsgemäß besteht dabei das System aus einer komprimiertes Kältemittel mit einem Druck von mindestens 3 bar enthaltenden Aerosoldose sowie einer Verbindungsleitung und ein an den Kältemittelkreislauf von Klimaanlagen anschließbares Adapterelement.

## Beschreibung

Die Erfindung betrifft ein System und Verfahren zur Nachbefüllung von Klimaanlagen mit Kältemittel, das universell an beliebigen Orten und flexibel eingesetzt werden kann. So ist die Erfindung besonders für die Nachbefüllung von Klimaanlagen mit Kältemittel, die mobil eingesetzt werden, geeignet.

Des Weiteren besteht die Möglichkeit mit der erfindungsgemäßen Lösung Leckstellen im Kältemittelkreislauf von Klimaanlagen in einfacher Form optisch erkennbar zu machen. Bevorzugt besteht aber auch die Möglichkeit solche Leckstellen beim Nachfüllen mit Kältemittel gleichzeitig dauerhaft abzudichten, so dass aufwendige Reparaturarbeiten an Klimaanlagen vermieden werden können.

Bei den herkömmlichen Klimaanlagen werden unterschiedliche Kältemittel eingesetzt, die seit einigen Jahren frei von Fluorchlorkohlenwasserstoffen sind. Die verschiedenen Hersteller von Klimaanlagen setzen dabei auch unterschiedliche Kältemittel ein.

Die Erfindung kann dabei unabhängig vom jeweiligen Kältemittel eingesetzt werden.

Seit vielen Jahren ist es auch bekannt, Leckstellen im Kreismittelkreislauf von Klimaanlagen durch Einführen organischer Silane durch Hydrolyse des jeweiligen Silans an einer solchen Leckstelle abzudichten.

Hierbei wird üblicherweise so vorgegangen, dass der Kältemittelkreislauf vollständig entleert wird, wobei hierfür ein relativ hoher Unterdruck an den Kältemittelkreislauf angelegt und das gesamte Kältemittel aus dem Kreislauf entfernt werden muss.

Nachfolgend wird aus stationären Anlagen unter Verwendung von großvolumigen Druckbehältern der Kältemittelkreislauf von Klimaanlagen nach befüllt. Dabei kann optional zum Abdichten von Leckstellen ein geeignetes organisches Silan mit zugegeben werden.

Der hierfür erforderliche anlagentechnische und Zeitaufwand ist erheblich, so dass eine solche Verfahrensweise nicht ohne weiteres an jedem Ort und in der Regel nur von hochqualifiziertem Personal ausgeführt werden kann.

Für die Abdichtung von Leckstellen im Kältemittelkreislauf von Klimaanlagen wurde u.a. in US 4,304,805 auch vorgeschlagen, Aminosilane einzusetzen. Diese Aminosilane bereiten jedoch aus toxikologischer Sicht und für eine Umweltbeeinflussung Probleme, so dass deren Einsatz in vielen Fällen nicht, nur mit erhöhtem Aufwand und unter Einhaltung erhöhter Vorsichtsmaßnahmen möglich ist.

Es ist daher Aufgabe der Erfindung eine Möglichkeit zu schaffen, mit der eine Nachbefüllung mit Kältemittel in den Kältemittelkreislauf von Klimaanlagen sehr einfach, flexibel mit geringem Kosten- und Zeitaufwand erfolgen kann.

Diese Aufgabe wird erfindungsgemäß mit einem System, das die Merkmale des Patentanspruchs 1 aufweist sowie einem Verfahren, wie es mit dem Patentanspruch 13 definiert ist, gelöst. Vorteilhafte Ausgestaltungsformen und Weiterbildungen der Erfindung können mit den in den untergeordneten Ansprüchen bezeichneten Merkmalen erreicht werden.

Das erfindungsgemäße System zur Nachbefüllung von Klimaanlagen mit Kältemittel besteht dabei im Wesentlichen aus drei Teilen. So wird eine das jeweilige Kältemittel in komprimierter Form enthaltende Aerosoldose über eine Verbindungsleitung und ein Adapterelement eingesetzt. Die Aerosoldose kann mittels des Adapterelementes an den jeweiligen Kältemittelkreislauf einer Klimaanlage angeschlossen werden, wofür geeignete und an sich bekannte Schnellverschluss-Systeme eingesetzt werden können.

Der Innendruck in der Aerosoldose sollte mindestens 3 bar betragen, wobei höhere Drücke von ca. 9 bar zu bevorzugen sind. In jedem Fall sollte der Innendruck des komprimierten Kältemittels jedoch so groß sein, dass eine Befüllung ohne weiteres möglich ist und ein ausreichend hoher Druckgradient zwischen Innendruck der Aerosoldose und dem Kältemittelkreislauf gegeben ist.

Neben dem Kältemittel kann in der Aerosoldose zusätzlich ein geeignetes Silan, mit dem durch Hydrolyse Leckstellen im Kältemittelkreislauf von Klimaanlagen abgedichtet werden können, enthalten sein.

Ein solches Silan sollte mit ausreichendem Überschuss in der Aerosoldose enthalten sein, um eine ausreichende Langzeitwirkung zu sichern, so dass auch zeitlich nachfolgend nach der Nachbefüllung aus der Aerosoldose entstehende Leckstellen durch die jeweilige Hydrolyse des Silanes abgedichtet werden können.

Dabei sollte der Anteil des jeweiligen Silanes im Kältemittel mindestens im Verhältnis 10 zu 90 Masse-% liegen.

Da, wie bereits einleitend angesprochen, Aminosilane Probleme bereiten und insbesondere in Verbindung mit der erfindungsgemäßen Lösung, also in Form von Aerosolen aus sicherheitstechnischen Gründen nicht verarbeitet werden sollen, sollte ein Trimethoxysilan, bevorzugt Isobutyltrimethoxysilan oder 3-Glycidoxy-Propyltrimethoxysilan eingesetzt werden.

Insbesondere die bezeichneten Trimethoxysilane sind für die verschiedenen gängigen Kältemittel geeignet, so dass eine unerwünschte gegenseitige Beeinflussung vermieden werden kann. Außerdem können sie in gelöster Form mit dem jeweiligen Kältemittel innerhalb des Kältemittelkreislaufes verteilt werden, so dass die vorteilhaft gewünschte Abdichtung von Leckstellen erreichbar ist.

Neben den Silanen, mit denen Leckstellen im Kältemittelkreislauf abgedichtet werden können, besteht aber auch die Möglichkeit entsprechende geeignete Farbstoffe neben dem jeweiligen Kältemittel und gegebenenfalls einem Silan in einer Aerosoldose vorzuhalten. Dadurch kann der Farbstoff mit dem Kältemittel ebenfalls in den Kältemittelkreislauf eingeführt werden. An Leckstellen kann dieser Farbstoff dann austreten, so dass die entsprechenden Leckstellen nachfolgend von außen optisch erkannt werden können und eine gegebenenfalls durch Reparatur erforderliche Abdichtung in kürzerer Zeit erfolgen kann.

Vorteilhaft kann es auch sein, zusätzlich zu den mindestens zwei vorab erwähnten Stoffkomponenten ein für diese geeignetes organisches Lösungsmittel zuzugeben. Hierfür kommen verschiedenen Alkohole und besonders vorteilhaft Isopropanol in Frage.

Außerdem besteht die Möglichkeit, in einer Aerosoldose zusätzlich ein flüssiges oder lösliches Schmiermittel vorzuhalten.

Als Kältemittel kann neben den üblichen Fluorchlorkohlenwasserstoff freien Kältemitteln auch Kohlendioxid eingesetzt werden. In diesem Fall ist die Zugabe von Alkohol besonders günstig.

Das erfindungsgemäße System sollte so ausgebildet sein, dass die eingangs der Erfindungsbeschreibung erwähnten drei wesentlichen Bestandteile zusammengefügt werden können. So sollte die Verbindungsleitung möglichst flexibel ausgebildet sein und mit der Aerosoldose am Ventil vor dem eigentlichen Gebrauch verbunden werden können.

Das Adapterelement für den Anschluss an den Kältemittelkreislauf kann fest mit der Verbindungsleitung verbunden sein oder auch mit der Verbindungsleitung verbunden werden können.

Die beim erfindungsgemäßen System einsetzbare Aerosoldose kann ein relativ kleines maximales Innenvolumen auch unterhalb eines Liters aufweisen. In der Regel werden aber Innenvolumina von 100 ml ausreichend sein, um die gewünschten vorteilhaften Effekte und hier insbesondere eine hohe Einsatzflexibilität erreichen zu können.

Das erfindungsgemäße System ist durch den einfachen Aufbau und die kostengünstige Herstellbarkeit nahezu beliebig einsetzbar. So ist ein Einsatz an jedem Ort ohne zusätzliche Komponenten, wie beispielsweise eine Energie- oder Druckgasversorgungseinrichtung möglich. Sie kann auch von nicht ausgebildeten Fachkräften ohne weiteres gehandhabt werden. Zusätzliche erhöhte Sicherheitserfordernisse für z.B. Druckgasbehälter müssen nicht eingehalten werden.

Der Raumbedarf für Transport und Lagerung ist ebenfalls relativ gering.

Nachfolgend soll die Erfindung anhand eines Beispiels näher erläutert werden.

Hierzu ist in einer Aerosoldose mit einem Innenvolumen von 100 ml das Kältemittel R 134a mit einer Masse von 45g enthalten. Zusätzlich wurde 3 Glycidoxy-Propyltrimethoxysilan mit einer Masse von 5g eingefüllt.

In der Aerosoldose wurde ein Druck zwischen 8 und 9 bar eingestellt.

Durch Verbindung der Verbindungsleitung mit dem Auslassventil der Aerosoldose und dem Anschluss des Adapterelementes an den Kältemittelkreislauf einer Klimaanlage konnte nach Öffnung des Ventils der Aerosoldose gleichzeitig Kältemittel nachgefüllt und falls erforderlich oder prophylaktisch für die Abdichtung von Leckstellen das 3 Glycidoxy-Propyltrimethoxysilan in den Kältemittelkreislauf eingeführt werden.

## Patentansprüche

1. System zur Nachbefüllung von Klimaanlagen mit Kältemittel, bei dem komprimiertes Kältemittel mit einem Druck von mindestens 3 bar in einer Aerosoldose enthalten ist,
am Auslassventil der Aerosoldose über eine Verbindungsleitung eine an den Kältemittelkreislauf einer Klimaanlage anschließbares Adapterelement angeschlossen ist.

2. System nach Anspruch 1,
**dadurch gekennzeichnet, dass** in der Aerosoldose zusätzlich ein Farbstoff und/oder ein Silan enthalten ist.

3. System nach Anspruch 1 oder 2,
**dadurch gekennzeichnet, dass** in der Aerosoldose Silan und Kältemittel im Verhältnis 10 zu 90 Masse-% enthalten sind.

4. System nach einem der vorhergehenden Ansprüche,
**dadurch gekennzeichnet, dass** in der Aerosoldose ein Trimethoxysilan enthalten ist.

5. System nach einem der vorhergehenden Ansprüche,
**dadurch gekennzeichnet, dass** Isobutyltrimethoxysilan oder 3 Glycidoxy-Propyltrimethoxysilan enthalten ist.

6. System nach einem der vorhergehenden Ansprüche,
**dadurch gekennzeichnet, dass** in der Aerosoldose zusätzlich ein organisches Lösungsmittel enthalten ist.

7. System nach Anspruch 6,
**dadurch gekennzeichnet, dass** Isopropanol enthalten ist.

8. System nach einem der vorhergehenden Ansprüche,
**dadurch gekennzeichnet, dass** in der Aerosoldose zusätzlich ein flüssiges oder lösliches Schmiermittel enthalten ist.

9. System nach einem der vorhergehenden Ansprüche,
**dadurch gekennzeichnet, dass** das Kältemittel ein fluorchlorkohlenwasserstofffreies Kältemittel ist

10. System nach einem der vorhergehenden Ansprüche,
**dadurch gekennzeichnet, dass** das Kältemittel Kohlendioxid ist.

11. System nach einem der vorhergehenden Ansprüche,
**dadurch gekennzeichnet, dass** die Verbindungsleitung flexibel ausgebildet ist.

12. System nach einem der vorhergehenden Ansprüche,
**dadurch gekennzeichnet, dass** die Verbindungsleitung an die Aerosoldose temporär anschließbar ist.

13. System nach einem der vorhergehenden Ansprüche,
**dadurch gekennzeichnet, dass** das Adapterelement an die Verbindungsleitung anschließbar ist.

14. Verfahren zur Nachbefüllung von Klimaanlagen mit einem System nach einem der Ansprüche 1 bis 13,
**dadurch gekennzeichnet, dass** ein komprimiertes Kältemittel aus einer Aerosoldose mittels eines an den Kältemittelkreislauf der Klimaanlage anschließbaren Adapterelementes, nach Öffnung eines Ventils der Aerosoldose über eine Verbindungsleitung unmittelbar in den Kältemittelkreislauf der Klimaanlage eingefüllt wird.

15. Verfahren nach Anspruch 14,
**dadurch gekennzeichnet, dass** mit dem Kältemittel ein Silan in den Kältemittelkreislauf eingeführt und durch Hydrolyse des Silans an Leckstellen eine dauerhafte Abdichtung des Kältemittelkreislaufes der Kühlanlage erreicht wird.

16. Verfahren nach Anspruch 15,
**dadurch gekennzeichnet, dass** das Silan in einem Überschuss in den Kältemittelkreislauf eingeführt wird.

17. Verfahren nach einer der Ansprüche 14 bis 16,
**dadurch gekennzeichnet, dass** in den Kältemittelkreislauf der Klimaanlage gemeinsam mit dem Kältemittel ein Farbstoff eingefüllt wird, der an Leckstellen im Kältemittelkreislauf austritt, so dass diese von außen optisch erkennbar werden.
